# EUROPEAN PATENT APPLICATION

(11) **EP 4 672 809 A1**
(43) Date of publication of application: **31.12.2025**
(21) Application number: 24774238.0
(22) Date of filing: 22.03.2024
(51) Int. Cl.: H04W 28/02, H04W 40/00

(54) **TRANSMISSION METHOD AND APPARATUS, AND DEVICE**

(30) Priority: 22.03.2023 CN 202310284493
(71) Applicant: CHINA MOBILE COMMUNICATION CO., LTD. RESEARCH INSTITUTE, Beijing 100053 (CN); CHINA MOBILE COMMUNICATIONS GROUP CO., LTD, Beijing 100032 (CN)
(72) Inventor: WANG, Rong, Beijing 100032 (CN); LI, Dan, Beijing 100032 (CN); WEI, Bin, Beijing 100032 (CN); XU, Yaoqiang, Beijing 100032 (CN); FANG, Yading, Beijing 100032 (CN)
(74) Representative: Hertin und Partner Rechts- und Patentanwälte PartG mbB
(86) International application number: PCT/CN2024/083143
(87) International publication number: WO 2024/193674

(57) **Abstract**

A transmission method, an apparatus, and a device are provided. The method includes: forwarding an uplink data packet to a first interface and/or to a Data Network (DN) according to a first rule and a second rule.

## Description

### CROSS-REFERENCE TO RELATED APPLICATION

The present application claims a priority to the Chinese patent application No. 202310284493.5 filed in China on March 22, 2023, a disclosure of which is incorporated herein by reference in its entirety.

### TECHNICAL FIELD

The present disclosure belongs to the field of communication technology, and particularly relates to a transmission method, apparatus, and device.

### BACKGROUND

The 5^{th} Generation Mobile Communication (5G) system supports the configuration of a 5G Virtual Network (VN) group for a group of users subscribed to the same slice and the same Data Network Name (DNN). However, it imposes a 1:1 restrictive relationship between slice + DNN and 5G VN group. That is, only one 5G VN group can be defined for one slice + DNN. When the 1:1 relationship between the slice + DNN and the 5G VN group is simply broken and multiple different VN groups are established under one slice + DNN, the problem of data forwarding requirements should be considered. For example, if multiple VN groups are configured within one slice + DNN on a single User Plane Function (UPF), when a downlink data packet enters the UPF, the UPF cannot determine to which VN group the packet should be forwarded. This is a critical problem that must be addressed when breaking the 1:1 restriction.

### SUMMARY

The embodiments of the present disclosure provide a transmission method, apparatus, and device. By considering the communication requirements and characteristics of the industry terminal, it addresses and breaks the 1:1 restriction between the slice + DNN and the 5G VN group, and proposes a data packet forwarding method suitable for industry group communications.

In a first aspect, it provides a transmission method, applied to a first network element, including:
forwarding an uplink data packet to a first interface and/or to a Data Network (DN) according to a first rule and a second rule.

Optionally, the method further includes:
forwarding a downlink data packet to a terminal according to a third rule.

Optionally, the first rule at least includes: in a Packet Detection Rule (PDR), a destination address is set as first address information.

Optionally, the first rule is at least used to match a data packet whose destination address is first address information.

In an embodiment of the present disclosure, the first rule further includes: in the PDR, a source interface is set to an access side, Core Network (CN) tunnel information is set to a Protocol Data Unit (PDU) session tunnel header (N3/N9), and in a Forwarding Action Rule (FAR), a destination interface is set to the first interface.

Optionally, the second rule is at least used to match a data packet whose destination address is not first address information, or to match another data packet that does not match the first address information.

Optionally, the second rule includes: in a Forwarding Action Rule (FAR), a destination interface is set to a core side.

Optionally, the second rule further includes: a priority of a packet filter that matches all packets is set to a lowest priority, and in the FAR, the destination interface is set to the core side.

Optionally, the second rule further includes: the FAR instructs the first network element to discard a data packet whose matched destination address is not first address information.

Optionally, the uplink data packet includes: a data packet received from any 5G virtual network group or sub-group member.

Optionally, the downlink data packet includes: a data packet received from the DN, or a data packet received through an N6 interface.

Optionally, the method further includes:
obtaining the first rule and/or the second rule and/or a third rule from a second network element.

Optionally, the first address information is included in the first rule, or a first address is delivered separately by a second network element.

Optionally, the first address information includes at least one of the followings: an IP or MAC address of a 5G virtual network group or sub-group member, a multicast IP or MAC address, or a broadcast IP or MAC address.

In an embodiment of the present disclosure, the IP or MAC address of the 5G virtual network group or sub-group member indicates IP addresses or MAC addresses of members belonging to a same virtual network group or sub-group; and/or
the multicast IP or MAC address indicates multicast IP or MAC addresses belonging to a same virtual network group or sub-group.

Optionally, the first network element includes a User Plane Function (UPF).

In a second aspect, it provides a transmission method, applied to a second network element, including:
sending a first rule and/or a second rule to a first network element, wherein the first rule and the second rule are used to instruct the first network element to forward uplink data to a first interface and/or to a Data Network (DN).

Optionally, the method further includes:
sending a third rule to the first network element, wherein the third rule is used to forward a downlink data packet to a terminal.

Optionally, the first rule at least includes: in a Packet Detection Rule (PDR), a destination address is set as first address information; and/or
the first rule is at least used to match data packet whose destination address is the first address information; and/or
the second rule is at least used to match a data packet whose destination address is not the first address information, or to match another packet that does not match the first address information; and/or
the second rule includes: in a Forwarding Action Rule (FAR), a destination interface is set to a core side; and/or
an uplink data packet includes: a data packet received from any 5G virtual network group or sub-group member.

Optionally, the first rule further includes: in the PDR, a source interface is set to an access side, Core Network (CN) tunnel information is set to a Protocol Data Unit (PDU) session tunnel header, and in the Forwarding Action Rule (FAR), the destination interface is set to the first interface; and/or
the second rule further includes: a priority of a packet filter that matches all packets is set to a lowest priority, and in the FAR, the destination interface is set to the core side; and/or the FAR instructs the first network element to discard a data packet whose matched destination address is not first address information.

Optionally, sending the first rule and/or the second rule and/or the third rule to the first network element includes:
sending the first rule and/or the second rule and/or the third rule to the first network element according to a first identifier, wherein the first identifier is locally configured and/or obtained from Unified Data Management (UDM) or Unified Data Repository (UDR), and/or obtained from a Policy Control Function (PCF).

Optionally, the first identifier is used to indicate whether communication between members of a virtual network group or virtual network sub-group has a specified characteristic, wherein the specified characteristic indicates that group communication between the members does not require DN interaction.

Optionally, the communication between the members includes at least one of the followings:
unicast communication;
multicast communication; or
broadcast communication.

Optionally, the first address information is included in the first rule, or a first address is delivered separately by the second network element.

Optionally, the first address information includes at least one of the followings: an IP or MAC address of a 5G virtual network group or sub-group member, a multicast IP or MAC address, or a broadcast IP or MAC address.

Optionally, the second network element includes a Session Management Function (SMF).

In a third aspect, it provides a transmission method, which is applied to a third network element, including:
obtaining a virtual network group identifier and first information from a fourth network element, wherein the first information includes at least one of the followings:
virtual network sub-group information;
a first identifier of a virtual network group or sub-group; or
group management information of the virtual network group or sub-group.

Optionally, the virtual network sub-group information includes at least one of the followings: a virtual network sub-group identifier, or Generic Public Subscription Identifier (GPSI) information of a virtual network sub-group member.

Optionally, the obtaining the first information from the fourth network element, includes:
receiving, from the fourth network element, a first message for requesting to create, delete, or update a virtual network group or sub-group, wherein the first message carries the first information.

Optionally, the method further includes:
obtaining information of a virtual network group to which current sub-group members belong;
determining, based on the information of the virtual network group, whether a first condition and a second condition are met;
when the first condition or the second condition is not met, rejecting the request from the fourth network element to create, delete, or update the virtual network group or sub-group; or
when the first condition and the second condition are met, sending the first information to Unified Data Management (UDM);
wherein the first condition includes that Generic Public Subscription Identifiers (GPSIs) of all virtual network sub-group members belong to a same virtual network group, and the second condition includes that any virtual network sub-group member do not simultaneously belong to two virtual network sub-groups.

Optionally, the method further includes:
obtaining information of a virtual network group to which the current group members belong;
determining, based on the information of the virtual network group, whether a third condition and a fourth condition are met;
when the third condition or the fourth condition is not met, rejecting the request from the fourth network element to create, delete, or update the virtual network group or sub-group; or
when the third condition and the fourth condition are met, sending the first information to Unified Data Management (UDM);
wherein the third condition includes Generic Public Subscription Identifiers (GPSIs) of all virtual network sub-group members belong to a same slice and Data Network Name (DNN), and the fourth condition includes that any virtual network group member do not simultaneously belong to two virtual network groups.

Optionally, the first identifier is used to indicate whether communication between members of a virtual network group or virtual network sub-group has a specified characteristic, wherein the specified characteristic indicates that group communication between the members does not require DN interaction.

Optionally, the communication between the members includes at least one of the followings:
unicast communication;
multicast communication; or
broadcast communication.

Optionally, the virtual network sub-group is determined by the fourth network element according to an isolation requirement and/or broadcast domain size of a terminal group.

Optionally, the group management information is used to carry multicast information of the virtual network group or virtual network sub-group, wherein the multicast information includes a correspondence relationship between an IP or MAC address of a terminal and a multicast IP or MAC address.

Optionally, the third network element is a Network Exposure Function (NEF), and/or the fourth network element is an Application Function (AF).

In a fourth aspect, a transmission method is provided, applied to a fourth network element, including:
sending a virtual network group identifier and first information to a third network element, wherein the first information includes at least one of the followings:
virtual network sub-group information;
a first identifier of a virtual network group or sub-group; or
group management information of the virtual network group or sub-group.

Optionally, the virtual network sub-group information includes at least one of the followings: a virtual network sub-group identifier, or Generic Public Subscription Identifier (GPSI) information of a virtual network sub-group member.

Optionally, sending the first information to the third network element includes:
sending, to the third network element, a first message for requesting to create, delete, or update a virtual network group or sub-group, wherein the first message carries the first information.

Optionally, the first identifier is used to indicate whether communication between members of a virtual network group or virtual network sub-group has a specified characteristic, wherein the specified characteristic indicates that group communication between the members does not require DN interaction.

Optionally, the communication between the members includes at least one of the followings:
unicast communication;
multicast communication; or
broadcast communication.

Optionally, the virtual network sub-group is determined by the fourth network element according to an isolation requirement and/or broadcast domain size of a terminal group.

Optionally, the group management information is used to carry multicast information of the virtual network group or virtual network sub-group, wherein the multicast information includes a correspondence relationship between an IP or MAC address of a terminal and a multicast IP or MAC address.

Optionally, the third network element is a Network Exposure Function (NEF), and/or the fourth network element is an Application Function (AF).

In a fifth aspect, a transmission apparatus is provided, applied to a first network element, including:
a forwarding module, configured to forward an uplink data packet to a first interface or to a Data Network (DN) according to a first rule, and/or to forward a downlink data packet received from the DN to a terminal according to a second rule.

In a sixth aspect, it provides a transmission apparatus, applied to a second network element, including:
a first sending module, configured to send a first rule and/or a second rule to a first network element, wherein the first rule is used for the first network element to forward an uplink data packet to a first interface or to a Data Network (DN), and the second rule is used for the first network element to forward a downlink data packet received from the DN to a terminal.

In a seventh aspect, it provides a transmission apparatus, applied to a third network element, including:
a second obtaining module, configured to obtain a virtual network group identifier and first information from a fourth network element, wherein the first information includes at least one of the followings: virtual network sub-group information; a first identifier of a virtual network group or sub-group; or group management information of the virtual network group or sub-group.

In an eighth aspect, a transmission apparatus is provided, applied to a fourth network element, including:
a second sending module, configured to send a virtual network group identifier and first information to a third network element, wherein the first information includes at least one of the followings: virtual network sub-group information; a first identifier of a virtual network group or sub-group; or group management information of the virtual network group or sub-group.

In a ninth aspect, it provides a communication device, including: a memory, a transceiver, and a processor; wherein the memory is configured to store a computer program, and the processor is configured to implement the steps of the method described in the first aspect, the second aspect, the third aspect, or the fourth aspect.

In a tenth aspect, it provides a processor-readable storage medium, on which a computer program is stored, wherein the computer program, when executed by a processor, implements the steps of the method described in the first aspect, the second aspect, the third aspect, or the fourth aspect.

In the embodiments of the present disclosure, the first network element forwards the uplink data packet to the first interface and/or to the Data Network (DN) according to the first rule and the second rule. This achieves traffic splitting of VN group member data in the uplink traffic, allowing the interaction between the terminal and the Data Network (DN) to be not restricted by a VN internal dual detection and forwarding mechanism, which meets the communication requirement of the industry terminal and aligns with the group communication characteristics of the industry terminal, and breaks the 1:1 restrictive relationship between the slice + DNN and the 5G VN group.

### BRIEF DESCRIPTION OF THE DRAWINGS

FIG. 1 is a flowchart of a transmission method provided by an embodiment;
FIG. 2 is another flowchart of the transmission method provided by an embodiment;
FIG. 3 is yet another flowchart of the transmission method provided by an embodiment;
FIG. 4 is still yet another flowchart of the transmission method provided by an embodiment;
FIG. 5a and FIG. 5b are schematic diagrams of a legality query for an AF group management request provided by an embodiment;
FIG. 6 is a schematic diagram of dynamic group management of non-activated (unprovisioned) users provided by an embodiment;
FIG. 7 is a schematic diagram of dynamic group management of activated (provisioned) users provided by an embodiment;
FIG. 8 is a schematic diagram of a PDU session establishment process for a non-activated (unprovisioned) user provided by an embodiment;
FIG. 9 is another flowchart of the transmission method provided by an embodiment;
FIG. 10 is a schematic diagram of a transmission apparatus provided by an embodiment;
FIG. 11 is another schematic diagram of the transmission apparatus provided by an embodiment;
FIG. 12 is yet another schematic diagram of the transmission apparatus provided by an embodiment;
FIG. 13 is still yet another schematic diagram of the transmission apparatus provided by an embodiment.
FIG. 14 is a schematic diagram of a communication device provided by an embodiment.

### DETAILED DESCRIPTION

The technical solutions of the embodiments of the present disclosure will be clearly described below in conjunction with the accompanying drawings in the embodiments of the present disclosure. Obviously, the embodiments described are part of the embodiments of the present disclosure, not all of the embodiments. Based on the embodiments of the present disclosure, all other embodiments obtained by those of ordinary skill in the art shall fall within the scope of protection of the present disclosure.

The terms "first", "second", and the like in the specification and claims of the present disclosure are used to distinguish similar objects, and are not intended to describe a specific order or sequence. It should be understood that data used like this may be interchanged under a proper condition for implementation of the embodiments of the disclosure described here in a sequence apart from those shown or described here. In addition, the objects distinguished by "first" and "second" are generally of the same type, and do not limit the number of objects. For example, the first object can be one or more. Furthermore, the use of "and/or" in the specification and claims indicates at least one of the connected objects, and the character "/" generally indicates that the objects associated with each other are in an "or" relationship.

Problem 1: Multiple Virtual Network (VN) groups are created under one slice + DNN, making it difficult to route downlink data.

Based on discussions with representatives from the 3rd Generation Partnership Project (3GPP) SA2 regarding the 5th Generation (5G) LAN standard, the original intention behind this restriction was primarily due to considerations related to a Data Network (DN). When establishing multiple VN groups under one slice + DNN network, the problem of downlink data forwarding must be addressed. For example, if multiple VN groups are established on a single User Plane Function (UPF) under the one slice + DNN, it becomes necessary to determine which VN group each downlink data should be forwarded to after entering the UPF. To solve this problem, a feasible approach is to split smaller sub-interfaces on the N6 interface for each sub-group. For example, for a Layer 2 5G LAN, this involves creating multiple Virtual eXtensible Local Area Network (VxLAN) sub-tunnels.

At the same time, based on industry demand analysis, some VN groups are of small granularity, and communication within these VN groups does not require interconnection with the DN. In most known business scenarios, such as power distribution network differential protection (two terminals per group), distributed self-healing in distribution networks (5-20 terminals per group), and peer-to-peer communication for robot charging (two terminals per group), it only requires inter-terminal communication and is unrelated to the DN (including in an industrial control field, where all interactive terminals can achieve wireless access and horizontal interconnection).

Problem 2: inability to support dynamic multicast management or multicast information distribution.

Currently, 3GPP only defines a dynamic multicast protocol for 5G VN groups that supports the Internet Group Management Protocol (IGMP). However, in actual business deployment, it is found that multicast for some industry terminals is statically defined. For example, in the distributed self-healing service of the power distribution network, each multicast address and its corresponding terminal address need to be statically configured on the User Plane Function (UPF), which is not flexible and is not conducive to business development.

Problem 3: high demand for the VN groups, and the current 1:1 relationship between the slices + Data Network Names (DNNs) and the VN groups cannot meet business requirements.

According to the current 3GPP standard, the 5G System (5GS) supports assigning a group of users subscribed to the same slice and the same DNN to a 5G VN group. However, the relationship between the slice + DNN and the 5G VN group must be 1:1. In other words, only one 5G VN group can be defined with respect to one slice + DNN.

However, in the actual promotion of industry applications, it has been found that the demand for VN groups is very high. First, 5G Local Area Networks (LANs) can serve a wide range of industries. Industries requiring Layer 2 communication, such as industrial Internet production lines, power distribution network differential protection, and distribution network self-healing, as well as industries with peer-to-peer communication requirements, such as smart buildings, smart transportation, and robot charging, can all be addressed by the 5G LAN technology solutions. Second, within the same business scenario, a large number of small-granularity VN groups are required, which may consist of groups of 2 terminals or 3-4 terminals. The current requirement that one slice + DNN corresponds to one 5G VN group indicates that for operators, the resource consumption for one slice + DNN would be significant, and maintenance would become challenging. For example, in power distribution network distributed self-healing, a set of distribution network self-healing device typically supports 5 to 20 terminals (i.e., one broadcast domain, one VN group). However, it is roughly estimated that there are tens of thousands of power distribution self-healing terminals in a single city.

Question 4: inability to achieve dynamic group management through capability exposure.

Currently, the 3GPP defines VN group management based on capability exposure, that is, a capability exposure management process involving Application Function (AF) → Network Exposure Function (NEF) → Unified Data Management (UDM) → Unified Data Repository (UDR). However, this process involves terminal subscription in the UDM. In actual deployment and applications, there may be cases where, after the NEF modifies the user subscription, the subscription data cannot be synchronized with the Business Operations Support System (BOSS)(as the BOSS does not support reverse notification or write capabilities). As a result, the 5G VN groups cannot achieve dynamic group management through capability exposure.

The virtual network sub-group in the present application may also be referred to as a sub-Virtual Network group (sub-VN group).

In the present application, "sub-group" refers to a subset formed by some or all members within a group or a 5G VN group, where a 5G VN group is a set of UEs using private communication for 5G LAN-type service.

The uplink data packet in the present application includes, but are not limited to, at least one of the followings: uplink packet, uplink data, uplink traffic, or uplink data traffic. The uplink data packet refers to a data packet received from any 5G VN group or sub-group member on the access network side.

A destination interface in the present application corresponds to a "Destination interface" as defined in the 3rd Generation Partnership Project (3GPP) standard, and the source interface corresponds to the "source interface" in the 3GPP.

The Data Network (DN) in the present application refers to a core network or a core side through an N6 interface. Optionally, the sub-VN group identifier includes, but is not limited to, at least one of the followings:
(1) sub-internal-group identifier;
(2) internal-sub-group identifier;
(3) 5G sub-VN group identifier;
(4) 5G sub-VN group identifier;
(5) virtual network sub-group identifier;
(6) VN internal sub-group identifier; or
(8) sub-internal-group identifier.

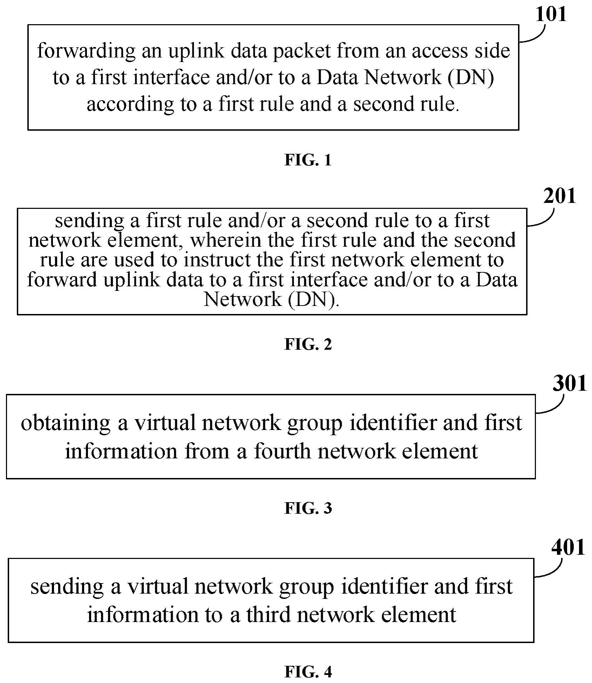

Referring to FIG. 1, an embodiment of the present disclosure provides a transmission method, which is applied to a first network element. The first network element includes, but is not limited to, a User Plane Function (UPF). The specific steps include: Step 101.

Step 101: forwarding an uplink data packet to a first interface and/or to a Data Network (DN) according to a first rule and a second rule.

The first rule and the second rule herein may be matched according to a priority order. For example, the first rule has a higher priority than the second rule, or the second rule is set to the lowest priority.

The first interface in the present application refers to the processing/implementation unit, processing/implementation entity, or processing/ implementation interface of the 5G VN group on the UPF. In the forwarding rule, it is identified by the 5G VN internal or VN internal interface. The traffic forwarding within the 5G VN group is implemented through the internal interface of the first network element (the 5G VN internal).

In an embodiment of the present disclosure, the method further includes:
forwarding a downlink data packet to a terminal according to a third rule.

In an embodiment of the present disclosure, the first rule at least includes: in a Packet Detection Rule (PDR), a destination address is set as first address information.

In an embodiment of the present disclosure, the first rule is at least used to match a data packet whose destination address is first address information.

In an embodiment of the present disclosure, the first rule further includes: in the PDR, a source interface is set to an access side, Core Network (CN) tunnel information is set to a Protocol Data Unit (PDU) session tunnel header (N3/N9), and a destination interface of a Forwarding Action Rule (FAR) is set to the first interface.

In an embodiment of the present disclosure, the second rule is at least used to match a data packet whose destination address is not first address information, or to match another data packet that does not match the first address information.

In an embodiment of the present disclosure, the second rule includes: in a Forwarding Action Rule (FAR), a destination interface is set to a core side.

In an embodiment of the present disclosure, the second rule further includes: a priority of a packet filter that matches all packets is set to a lowest priority, in the FAR, the destination interface is set to the core side; and/or the FAR instructs the first network element to discard a data packet whose matched destination address is not first address information.

In an embodiment of the present disclosure, the uplink data packet includes: a data packet received from any 5G virtual network group or sub-group member. In an embodiment, a specific identifier is set during subscription management of the VN group or sub-group when only inter-UE communication exists. During the session establishment process, the SMF simplifies the PDR and FAR functions for data forwarding of the terminal.

In an embodiment of the present disclosure, the downlink data packet includes: a data packet received from the DN, or a data packet received through an N6 interface.

In an embodiment of the present disclosure, the third rule is at least used to match a data packet from the DN.

In an embodiment of the present disclosure, the third rule includes: in a PDR, a source interface is set to a core side, a destination address is set to a data packet whose destination is an Internet Protocol (IP) or a Media Access Control (MAC) address of a terminal, and a FAR is set to an access side.

In an embodiment of the present disclosure, the destination address in the first rule, the second rule, and the third rule may be the MAC address of a User Equipment (UE, i.e., a terminal) in the SDF filter IE. In related art, the SDF filter IE configures source and destination addresses based on downlink data flows. However, during the UPF processing, depending on whether the traffic is uplink or downlink (as identified by the Source Interface), the UPF applies different processing logic. For downlink traffic (Source Interface = Core), the UPF performs data processing and matching based on the source and destination addresses in the SDF filter IE. For uplink traffic (Source Interface = Access), the UPF swaps the source and destination addresses configured in the SDF filter IE (i.e., when matching uplink traffic, the destination address is the source address configured in the SDF filter IE, and the source address is the destination address configured in the SDF filter IE) before performing data processing and matching.

In an embodiment of the present disclosure, the UP function shall apply the SDF filter based on the Source Interface of the PDR as follows: when the Source Interface is CORE, this indicates that the filter is for downlink data flow, so the UP function shall apply the Flow Description as is; when the Source Interface is ACCESS, this indicates that the filter is for uplink data flow, so the UP function shall swap the source and destination address/port in the Flow Description.

In an embodiment of the present disclosure, the method further includes:
obtaining the first rule and/or the second rule and/or a third rule from a second network element.

Optionally, the second network element includes, but is not limited to, a Session Management Function (SMF).

In an embodiment of the present disclosure, the first address information is included in the first rule, or a first address is delivered separately by a second network element.

In an embodiment of the present disclosure, the first address information includes at least one of the followings: an IP or MAC address of a 5G virtual network group or sub-group member, a multicast IP or MAC address, or a broadcast IP or MAC address.

In an embodiment of the present disclosure, the IP or MAC address of the 5G virtual network group or sub-group member indicates IP addresses or MAC addresses of members belonging to a same virtual network group or sub-group; and/or
the multicast IP or MAC address indicates multicast IP or MAC addresses belonging to a same virtual network group or sub-group.

In an embodiment, the traffic splitting of the VN group member data in the uplink traffic is achieved, so that the interaction between the terminal and the DN is not restricted by a VN internal dual detection and forwarding mechanism. This meets the communication requirements of the industry terminal and aligns with the group communication characteristics of the industry terminal, breaking the 1:1 restrictive relationship between the slice + DNN and the 5G VN group.

Referring to FIG. 2, an embodiment of the present disclosure provides a transmission method, which is applied to a second network element, wherein the second network element includes, but is not limited to, a Session Management Function (SMF). The specific steps include: Step 201.

Step 201: sending a first rule and/or a second rule to a first network element, wherein the first rule and the second rule are used to instruct the first network element to forward uplink data to a first interface and/or to a Data Network (DN).

It can be understood that the second network element sending the first rule and/or the second rule to the first network element may be that the second network element indicates the first rule and/or the second rule to the first network element.

In an embodiment of the present disclosure, a third rule is sent to the first network element, wherein the third rule is used to forward a downlink data packet to a terminal.

In an embodiment of the present disclosure, the first rule at least includes: in a Packet Detection Rule (PDR), a destination address is set as first address information.

In an embodiment of the present disclosure, the first rule is at least used to match data packet whose destination address is the first address information.

In an embodiment of the present disclosure, the first rule further includes: in the PDR, a source interface is set to an access side, Core Network (CN) tunnel information is set to a Protocol Data Unit (PDU) session tunnel header (N3/N9), and in a Forwarding Action Rule (FAR), a destination interface is set to the first interface.

In an embodiment of the present disclosure, the second rule is at least used to match a data packet whose destination address is not the first address information, or to match another packet that does not match the first address information.

In an embodiment of the present disclosure, the second rule includes: in a Forwarding Action Rule (FAR), a destination interface is set to a core side.

In an embodiment of the present disclosure, the second rule further includes: a priority of a packet filter that matches all packets is set to a lowest priority, and in the FAR, the destination interface is set to the core side; and/or the FAR instructs the first network element to discard a data packet whose matched destination address is not first address information.

In an embodiment of the present disclosure, the uplink data packet includes: a data packet received from any 5G virtual network group or sub-group member.

In an embodiment of the present disclosure, the downlink data packet includes: a data packet received from the DN, or a data packet received through an N6 interface.

In an embodiment of the present disclosure, the third rule is at least used to match a data packet from the DN.

In an embodiment of the present disclosure, the third rule includes: in a PDR, a source interface is set to a core side, a destination address is set to a data packet whose destination is an Internet Protocol (IP) or a Media Access Control (MAC) address of a terminal, and a FAR is set to an access side.

In an embodiment of the present disclosure, the second network element sends the first rule and/or the second rule and/or the third rule to the first network element according to a first identifier, wherein the first identifier is locally configured and/or obtained from Unified Data Management (UDM) or Unified Data Repository (UDR), and/or obtained from a Policy Control Function (PCF).

In an embodiment of the present disclosure, the first identifier is used to indicate whether communication between members of a virtual network group or virtual network sub-group has a specified characteristic, wherein the specified characteristic indicates that group communication between the members does not require the DN interaction.

In an embodiment of the present disclosure, the communication between the members includes at least one of the followings:
(1) unicast communication;
(2) multicast communication; or
(3) broadcast communication.

For example, the first identifier includes multiple identification bits, each of which indicates whether the group member communication has the following characteristics: (1) unicast communication; (2) multicast communication; (3) broadcast communication; (4) no DN interconnection. For example, the first identifier is "1100", which indicates that the group or sub-group only includes unicast and multicast communications.

In an embodiment, the 5G LAN technology can be simplified. Specifically, a specific identifier is set during subscription management of the VN group or sub-group when only inter-UE communication exists. During the session establishment process, the second network element simplifies the PDR and FAR functions for data forwarding of the terminal.

In an embodiment of the present disclosure, the first address information is included in the first rule, or a first address is delivered separately by the second network element.

In an embodiment of the present disclosure, the first address information includes at least one of the followings: an IP or MAC address of a 5G virtual network group or sub-group member, a multicast IP or MAC address, or a broadcast IP or MAC address.

In an embodiment, the traffic splitting of VN group member data in the uplink traffic is achieved, so that the interaction between the terminal and the DN is not restricted by a VN internal dual detection and forwarding mechanism. This meets the communication requirements of the industry terminal and aligns with the group communication characteristics of the industry terminal, breaking the 1:1 restrictive relationship between the slice + DNN and the 5G VN group.

Referring to FIG. 3, an embodiment of the present disclosure provides a transmission method, which is applied to a third network element. The third network element includes, but is not limited to, a Network Exposure Function (NEF). The specific steps include: Step 301.

Step 301: obtaining a virtual network group identifier and first information from a fourth network element, wherein the first information includes at least one of the followings:
(1) virtual network sub-group information;
(2) a first identifier of a virtual network group or sub-group; or
(3) group management information of the virtual network group or sub-group.

In an embodiment of the present disclosure, the virtual network sub-group information includes at least one of the followings: a virtual network sub-group identifier, or Generic Public Subscription Identifier (GPSI) information of a virtual network sub-group member.

In an embodiment of the present disclosure, the obtaining first information from the fourth network element, includes:
receiving, from the fourth network element, a first message for requesting to create, delete, or update a virtual network group or sub-group, wherein the first message carries the first information.

The first message in the present application may also be referred to as a Create/Delete/Update sub-5G VN group request message.

In an embodiment of the present disclosure, the method further includes:
obtaining information of a virtual network group to which current sub-group members belong;
determining, based on the information of the virtual network group, whether a first condition and a second condition are met;
when the first condition or the second condition is not met, rejecting the request from the fourth network element to create, delete, or update the virtual network group or sub-group; or
when the first condition and the second condition are met, sending the first information to Unified Data Management (UDM);
wherein the first condition includes that Generic Public Subscription Identifiers (GPSIs) of all virtual network sub-group members belong to a same virtual network group, and the second condition includes that any virtual network sub-group member do not simultaneously belong to two virtual network sub-groups.

In an embodiment of the present disclosure, the method further includes:
obtaining information of a virtual network group to which the current group members belong;
determining, based on the information of the virtual network group, whether a third condition and a fourth condition are met;
when the third condition or the fourth condition is not met, rejecting the request from the fourth network element to create, delete, or update the virtual network group or sub-group; or
when the third condition and the fourth condition are met, sending the first information to Unified Data Management (UDM);
wherein the third condition includes Generic Public Subscription Identifiers (GPSIs) of all virtual network sub-group members belong to a same slice and Data Network Name (DNN), and the fourth condition includes that any virtual network group member do not simultaneously belong to two virtual network groups.

In an embodiment of the present disclosure, the first identifier is used to indicate whether communication between members of a virtual network group or virtual network sub-group has a specified characteristic, wherein the specified characteristic indicates that group communication between the members does not require DN interaction.

In an embodiment of the present disclosure, the communication between the members includes at least one of the followings:
(1) unicast communication
(2) multicast communication; or
(3) broadcast communication.

In an embodiment of the present disclosure, the virtual network sub-group is determined by the fourth network element according to an isolation requirement and/or broadcast domain size of a terminal group.

In an embodiment of the present disclosure, the group management information is used to carry multicast information of the virtual network group or virtual network sub-group, wherein the multicast information includes a correspondence relationship between an IP or MAC address of a terminal and a multicast IP or MAC address.

In an embodiment of the present disclosure, the fourth network element is an Application Function (AF).

In an embodiment, the dynamic group management is achieved through interaction between the fourth network element and the third network element. The group management includes sub-group management, multicast information management, and/or simplified identification of groups or sub-groups.

Under one VN group, multiple sub-VN groups can be created. The present disclosure maintains the 1:1 relationship between the 5G VN group and the slice + DNN, and the 5G VN group serves as the default grouping for terminals. For example, for distributed self-healing services for the electric power industry, an operator can issue hundreds of terminal cards for distributed self-healing services to an electric power customer in a single batch, all under a unified subscription to one slice + DNN + VN group. Subsequently, the customer can create, delete, and modify sub-groups as needed through the capability exposure interface, either before or after the card activation.

Referring to FIG. 4, an embodiment of the present disclosure provides a transmission method, which is applied to a fourth network element. The fourth network element includes, but is not limited to, an Application Function (AF). The specific steps include: Step 401.

Step 401: sending a virtual network group identifier and first information to a third network element, wherein the first information includes at least one of the followings:
(1) virtual network sub-group information;
(2) a first identifier of a virtual network group or sub-group; or
(3) group management information of the virtual network group or sub-group.

In an embodiment of the present disclosure, the virtual network sub-group information includes at least one of the followings: a virtual network sub-group identifier, or Generic Public Subscription Identifier (GPSI) information of a virtual network sub-group member.

In an embodiment of the present disclosure, sending the first information to the third network element includes:
sending, to the third network element, a first message for requesting to create, delete, or update a virtual network group or sub-group, wherein the first message carries the first information.

In an embodiment of the present disclosure, the first identifier is used to indicate whether communication between members of a virtual network group or virtual network sub-group has a specified characteristic, wherein the specified characteristic indicates that group communication between the members does not require DN interaction.

In an embodiment of the present disclosure, the communication between the members includes at least one of the followings:
(1) unicast communication;
(2) multicast communication; or
(3) broadcast communication.

In an embodiment of the present disclosure, the virtual network sub-group is determined by the fourth network element according to an isolation requirement and/or broadcast domain size of a terminal group.

In an embodiment of the present disclosure, the group management information is used to carry multicast information of the virtual network group or virtual network sub-group, wherein the multicast information includes a correspondence relationship between an IP or MAC address of a terminal and a multicast IP or MAC address.

In an embodiment of the present disclosure, the third network element is a Network Exposure Function (NEF).

In an embodiment, the dynamic group management is achieved through the interaction between the fourth network element and the third network element. The group management includes sub-group management, multicast information management, and/or simplified identification of groups or sub-groups. Under one VN group, multiple sub-VN groups can be created. The present disclosure maintains the 1:1 relationship between the 5G VN group and the slice + DNN, and the 5G VN group serves as the default grouping for terminals. For example, for distributed self-healing services for the electric power industry, an operator can issue hundreds of terminal cards for distributed self-healing services to an electric power customer in a single batch, all under a unified subscription to one slice + DNN + VN group. Subsequently, the customer can create, delete, and modify sub-groups as needed through the capability exposure interface, either before or after the card activation.

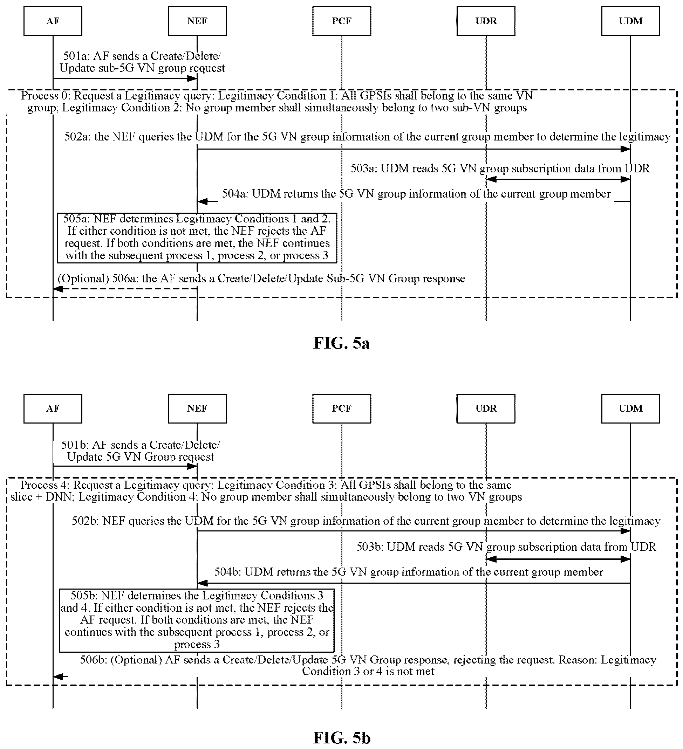

Referring to FIG. 5a, the specific steps include the followings.

Step 501a: the AF sends a Create/Delete/Update sub-5G VN group request (Nnef_ParameterProvision_Create/Update/Delete request) message to the NEF.

Optionally, the Create/Delete/Update sub-5G VN group request message carries at least one of the followings:
(1) a Sub-VN group identifier;
(2) a group member {GPSI list};
(3) a first identifier (or indicator); or
(4) group management information.

Step 502a: the NEF queries the UDM for the 5G VN group information of the current group member to determine the legitimacy.

Optionally, the query request may carry group member {GPSI list}.

Step 503a: the UDM reads 5G VN group subscription data from UDR.

Optionally, the read request (Nudr_DM_Query) carries the group member {GPSI list}.

Step 504a: the UDM returns the 5G VN group information of the current group member.

Optionally, the 5G VN group information may include at least one of the followings: a group member, a VN group identifier, and a sub-VN group identifier.

Step 505a: the NEF determines a Legitimacy Condition 1 and a Legitimacy Condition 2. If either condition is not met, the NEF rejects the Create/Delete/Update Sub-5G VN Group request message. If both conditions are met, the NEF continues with the subsequent process 1, process 2, or process 3.
Legitimacy Condition 1: all GPSIs shall belong to the same VN group;
Legitimacy Condition 2: no group member shall simultaneously belong to two sub-VN groups.

Step 506a (optional): the AF sends a Create/Delete/Update Sub-5G VN Group response rejection request.

Optionally, the Create/Delete/Update Sub-5G VN Group response rejection request carries a reason, such as failure to meet the Legitimacy Condition 1 or Legitimacy Condition 2.

Referring to FIG. 5b, the specific steps include the following steps.

Step 501b: the AF sends a Create/Delete/Update 5G VN Group request (Nnef_ParameterProvision_Create/Update/Delete request) message to the NEF.

Optionally, the Create/Delete/Update 5G VN Group request message carries at least one of the followings:
(1) a sub-VN group identifier;
(2) a group member {GPSI list};
(3) a first identifier (or indicator);
(4) group management information.

Step 502b: the NEF queries the UDM for the 5G VN group information of the current group member to determine the legitimacy.

Optionally, the query request may carry group member {GPSI list}.

Step 503b: the UDM reads the 5G VN group subscription data from the UDR.

Optionally, the read request (Nudr_DM_Query) carries the group member {GPSI list}.

Step 504b: the UDM returns the 5G VN group information of the current group member.

Optionally, the 5G VN group information may include at least one of the followings: a group member, a VN group identifier, and a sub-VN group identifier.

Step 505b: the NEF determines the Legitimacy Condition 3 and the Legitimacy Condition 4. If either condition is not met, the NEF rejects the Create/Delete/Update 5G VN Group request message. If both conditions are met, the NEF continues with the subsequent process 1, process 2, or process 3.
Legitimacy Condition 3: All GPSIs shall belong to the same slice + DNN;
Legitimacy Condition 4: no group member shall simultaneously belong to two VN groups.

Step 506b (optional): the AF sends a Create/Delete/Update 5G VN Group response rejection request.

Optionally, the Create/Delete/Update 5G VN Group response rejection request carries a reason, such as failure to meet the Legitimacy Condition 3 or Legitimacy Condition 4.

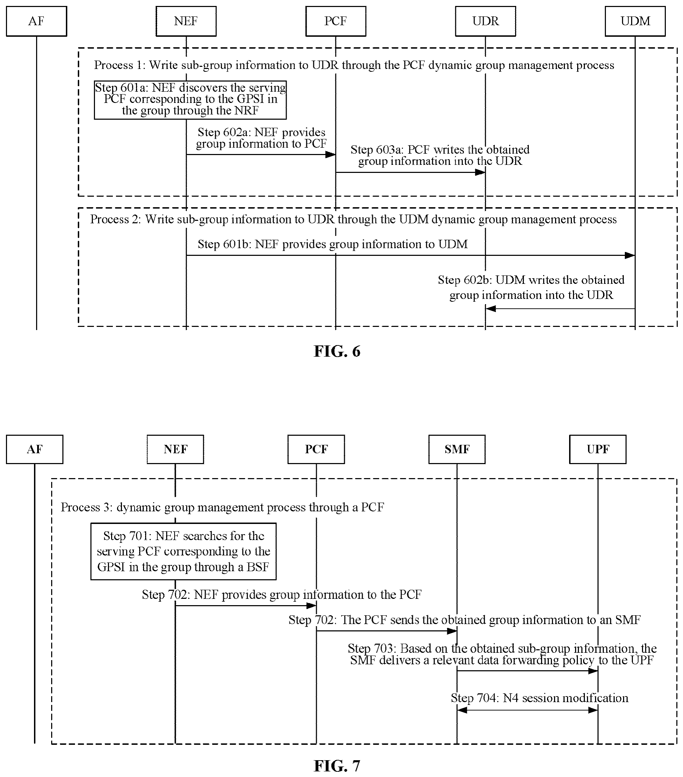

Referring to FIG. 6, which includes: Process 1 and Process 2. Process 1 describes the dynamic group management process through the PCF, in which the sub-group information is written to the UDR. Process 2 describes the dynamic group management process through the UDM, in which sub-group information is written to the UDR.

The steps in Process 1 include the followings.

Step 601a: the NEF discovers the serving PCF corresponding to the GPSI in the group through the NRF.

Step 602a: the NEF provides group information to PCF;
Optionally, the group information (equivalent to the first information) carries at least one of the followings:
(1) a sub-VN group identifier;
(2) a group member {GPSI list};
(3) a first identifier;
(4) a group management information.

Step 603a: the PCF writes the obtained group information into the UDR.

The steps in Process 2 include the followings.

Step 601b: the NEF provides the group information to the UDM.

For example, the NEF provides the group information to the UDM by invoking Nudm_ParameterProvision_Creat/Update/Delete.

Optionally, the group information carries at least one of the followings:
(1) a sub-VN group identifier;
(2) a group member {GPSI list};
(3) a first identifier;
(4) group management information.

Step 602b: the UDM writes the obtained group information into the UDR.

Optionally, the UDM writes the obtained group information to the UDR by invoking Nudr_DM_Query and Nudr_DM_Creat/Update/Delete.

Referring to FIG. 7, a dynamic group management process through a PCF (Process 3) includes the following steps.

Step 701: an NEF discovers for the serving PCF corresponding to the GPSI in the group through a BSF.

Step 702: An NEF provides group information to the PCF.

Step 703: The PCF sends the obtained group information to an SMF.

Step 704: based on the obtained sub-group information, the SMF delivers a relevant data forwarding policy to the UPF.

Optionally, the data forwarding policy includes at least one of the followings:
(1) create a sub-VN group;
(2) based on the received first identifier, deliver the corresponding PDR or FAR rule; or
(3) based on the received group management information, deliver relevant group management information to the UPF.

Step 705: the SMF sends N4 Session Modification to the UPF.

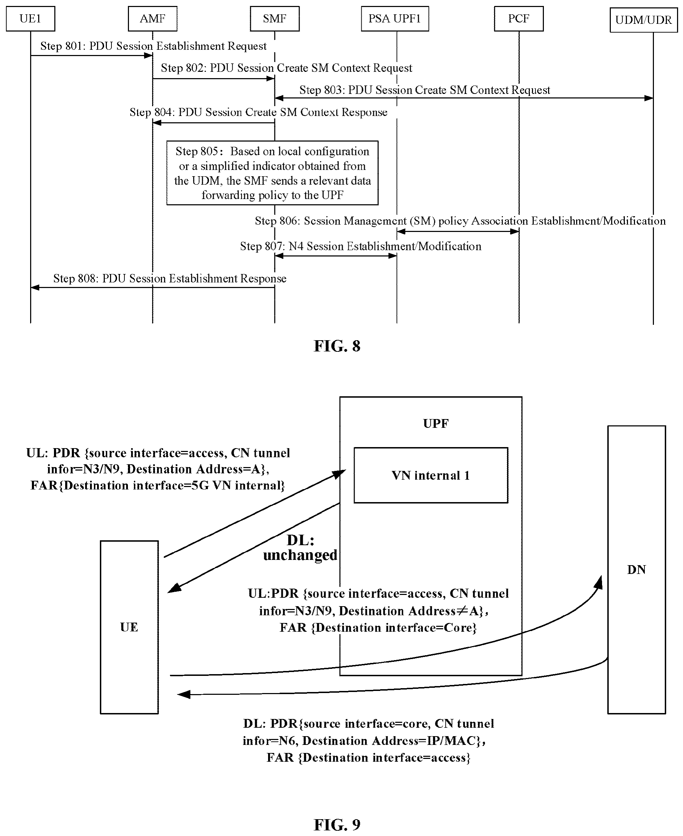

Referring to FIG. 8, the specific steps include the followings.

Step 801: a UE1 sends a PDU Session Establishment Request to an AMF.

Step 802: the AMF sends a PDU Session Create SM Context Request to an SMF.

Step 803: subscription retrieval/subscription for update is performed between the SMF and the UDM or UDR.

Step 804: the SMF sends a PDU Session Create SM Context Response to the AMF.

Step 805: based on local configuration or the indicator obtained from the UDM, the SMF sends a relevant data forwarding policy to the UPF.

Step 806: Session Management (SM) policy Association Establishment/Modification is performed between the PSA UPF1 and the PCF.

Step 807: N4 Session Establishment/Modification is performed between the SMF and the PSA UPF1.

Step 808: The SMF sends a PDU Session Establishment Response to the UE1.

Referring to FIG. 9, which illustrates a data forwarding mode.

### I. Uplink traffic management

1. For traffic related to horizontal communication within a VN group, a PDR adds the Destination Address=A. The parameter A includes:
   (1) IP or MAC address of another VN group member: an SMF adds, based on the online status of VN group members, a new address to the Destination Address = A in the uplink PDR whenever a new VN group member is added or a new MAC address is detected in the PDU session of the VN group member;
   (2) multicast IP or MAC address: obtained by the SMF through local configuration or a capability exposure procedure;
   (3) broadcast address (FFFF or 255): obtained by the SMF through local configuration or a capability exposure procedure.
2. For other traffic directed to a DN, the PDR forwards traffic with destination addresses not matching A directly to the Core N6 interface or discards it as needed.

### II. Downlink traffic management

For downlink flows from the DN, it is directly routed to the access terminal PDU session, which follows a traditional 5G approach.

### III. First identifier

The SMF supports obtaining the first identifier through local configuration, BOSS, or a capability exposure procedure.

Based on the meaning corresponding to the first identifier, the SMF delivers corresponding management rules to the UPF.

The first identifier may indicate that the VN group has one of the following characteristics:
1. only point-to-point communication exists between the VN group members;
2. only unicast and multicast communications exists between the VN group members;
3. the VN group members only require inter-terminal communication, with no need for communication with the DN.

According to the above different VN group characteristics, the PDR/FAR forwarding rules delivered by the SMF to the UPF are different. Details are as follows.
1) Only point-to-point communication exists between VN group members.
   In the PDR/FAR rules delivered by the SMF to the UPF:
   (1) in the PDR matching rule for uplink traffic, the source interface = access, and the destination address is set as a packet of the IP/MAC address of other terminals in the VN group, in the FAR, the destination interface is set to 5G VN internal or VN internal interface. For other unmatched packets, the FAR points to the Core N6 interface;
   (2) in the PDR matching rule for downlink traffic, the source interface = core, and the destination address is set as the packet of the terminal address; in the FAR, the destination interface is set as access; the source interface = VN internal, and the destination address is set as the packet of the terminal address, the destination interface of the FAR is set as access.
2) Only unicast and multicast communication exists between the VN group members.
   The PDR/FAR rules issued by the SMF to the UPF include:
   (1) in the PDR matching rule for uplink traffic, the source interface = access, and the destination address is set as the packet of the IP/MAC address of another terminal in the VN group or the packet of the multicast IP/MAC address, in the FAR, the destination interface is set as the 5G VN internal or VN internal interface. For another unmatched packet, the FAR points to the Core N6 interface;
   (2) in the PDR matching rule for downlink traffic, the source interface = core, and the destination address is set as the packet of the terminal address; in the FAR, the destination interface is set as access; the source interface = VN internal, and the destination address is set as the packet of the terminal address, the destination interface of the FAR is set as access.
3) The VN group members only require inter-terminal communication, with no need for communication with the DN.

The PDR/FAR rule delivered by the SMF to the UPF is based on the above two situations and includes:
(1) in the PDR matching rule of the uplink traffic, for other unmatched data packets, the FAR instructs the UPF to discard the traffic.

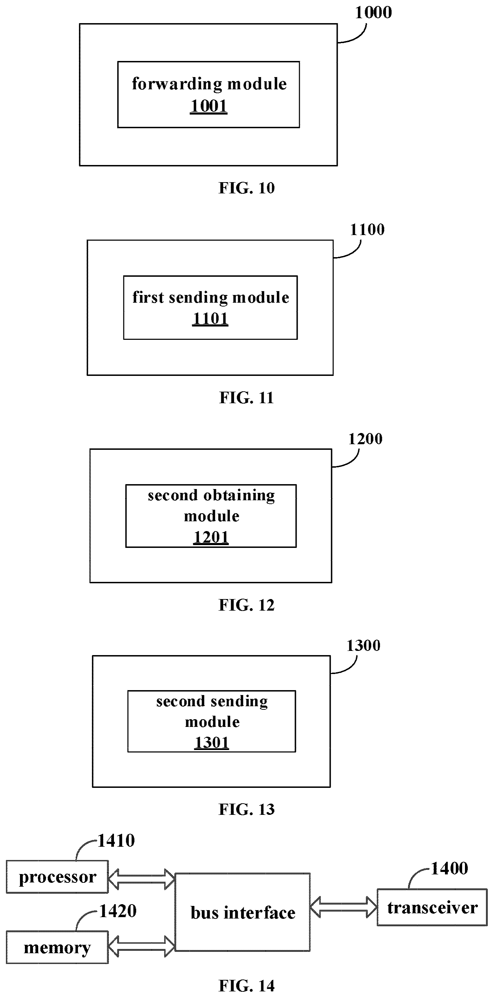

Referring to FIG. 10, an embodiment of the present disclosure provides a transmission apparatus, which is applied to a first network element. The first network element includes, but is not limited to, a User Plane Function (UPF). The apparatus 1000 includes:
a first forwarding module 1001, configured to forward an uplink data packet to a first interface and/or to a Data Network (DN) according to a first rule and a second rule.

In an embodiment of the present disclosure, the apparatus further includes a second forwarding module, configured to forward a downlink data packet to the terminal according to a third rule.

In an embodiment of the present disclosure, the first rule at least includes: in a Packet Detection Rule (PDR), a destination address is set as first address information.

In an embodiment of the present disclosure, the first rule is at least used to match a data packet whose destination address is first address information.

In an embodiment of the present disclosure, the first rule further includes: in the PDR, a source interface is set to an access side, Core Network (CN) tunnel information is set to a Protocol Data Unit (PDU) session tunnel header (N3/N9), and in a Forwarding Action Rule (FAR), a destination interface is set to the first interface.

In an embodiment of the present disclosure, the second rule is at least used to match a data packet whose destination address is not first address information, or to match another data packet that does not match the first address information.

In an embodiment of the present disclosure, the second rule includes: in a Forwarding Action Rule (FAR), a destination interface is set to a core side.

In an embodiment of the present disclosure, the second rule further includes: a priority of a packet filter that matches all packets is set to a lowest priority, and in the FAR, the destination interface is set to the core side; and/or the FAR instructs the first network element to discard a data packet whose matched destination address is not first address information.

In an embodiment of the present disclosure, the uplink data packet includes: a data packet received from any 5G virtual network group or sub-group member.

In an embodiment of the present disclosure, the downlink data packet includes: a data packet received from the DN, or a data packet received through an N6 interface.

In an embodiment of the present disclosure, the apparatus further includes:
a first obtaining module, configured to obtain the first rule and/or the second rule and/or the third rule from a second network element.

Optionally, the second network element includes, but is not limited to, a Session Management Function (SMF).

In an embodiment of the present disclosure, the first address information is included in the first rule, or a first address is delivered separately by a second network element.

In an embodiment of the present disclosure, the first address information includes at least one of the followings: an IP or MAC address of a 5G virtual network group or sub-group member, a multicast IP or MAC address, or a broadcast IP or MAC address.

In an embodiment of the present disclosure, the IP or MAC address of the 5G virtual network group or sub-group member indicates IP addresses or MAC addresses of members belonging to a same virtual network group or sub-group; and/or
the multicast IP or MAC address indicates multicast IP or MAC addresses belonging to a same virtual network group or sub-group.

In the embodiments of the present disclosure, the apparatus can implement each process implemented by the method embodiment shown in FIG. 1 of the present disclosure and achieve the same beneficial effects. To avoid repetition, these will not be elaborated here.

Referring to FIG. 11, an embodiment of the present disclosure provides a transmission apparatus, which is applied to a second network element. The second network element includes, but is not limited to, a Session Management Function (SMF). The apparatus 1100 includes:
a first sending module 1101, configured to send a first rule and/or a second rule to a first network element, wherein the first rule and the second rule are used to instruct the first network element to forward uplink data to a first interface and/or to a Data Network (DN).

In an embodiment of the present disclosure, the first rule at least includes: in a Packet Detection Rule (PDR), a destination address is set as first address information.

In an embodiment of the present disclosure, the first rule is at least used to match a data packet whose destination address is first address information.

In an embodiment of the present disclosure, the first rule further includes: in the PDR, a source interface is set to an access side, Core Network (CN) tunnel information is set to a Protocol Data Unit (PDU) session tunnel header (N3/N9), and in a Forwarding Action Rule (FAR), a destination interface is set to the first interface.

In an embodiment of the present disclosure, the second rule is at least used to match a data packet whose destination address is not first address information, or to match another data packet that does not match the first address information.

In an embodiment of the present disclosure, the second rule includes: in a Forwarding Action Rule (FAR), a destination interface is set to a core side.

In an embodiment of the present disclosure, the second rule further includes: a priority of a packet filter that matches all packets is set to a lowest priority, and in the FAR, the destination interface is set to the core side; and/or the FAR instructs the first network element to discard a data packet whose matched destination address is not first address information.

In an embodiment of the present disclosure, the uplink data packet includes: a data packet received from any 5G virtual network group or sub-group member.

In an embodiment of the present disclosure, the downlink data packet includes: a data packet received from the DN, or a data packet received through an N6 interface.

In an embodiment of the present disclosure, the first sending module 1101 is further configured to:
send the first rule and/or the second rule and/or the third rule to the first network element according to a first identifier, wherein the first identifier is locally configured and/or obtained from Unified Data Management (UDM) or Unified Data Repository (UDR), and/or obtained from a Policy Control Function (PCF).

In an embodiment of the present disclosure, the first identifier is used to indicate whether communication between members of a virtual network group or virtual network sub-group has a specified characteristic, wherein the specified characteristic indicates that group communication between the members does not require DN interaction.

In an embodiment of the present disclosure, the communication between the members includes at least one of the followings:
(1) unicast communication;
(2) multicast communication; or
(3) broadcast communication.

In an embodiment of the present disclosure, the first address information is included in the first rule, or a first address is delivered separately by a second network element.

In an embodiment of the present disclosure, the first address information includes at least one of the followings: an IP or MAC address of a 5G virtual network group or sub-group member, a multicast IP or MAC address, or a broadcast IP or MAC address.

In the embodiments of the present disclosure, the apparatus can implement each process implemented by the method embodiment shown in FIG. 2 of the present disclosure and achieve the same beneficial effects. To avoid repetition, these will not be elaborated here.

Referring to FIG. 12, an embodiment of the present disclosure provides a transmission apparatus, which is applied to a third network element. The third network element includes, but is not limited to, a Network Exposure Function (NEF). The apparatus 1200 includes:
a second obtaining module, configured to obtain a virtual network group identifier and first information from a fourth network element, wherein the first information includes at least one of the followings:
(1) virtual network sub-group information;
(2) a first identifier of a virtual network group or sub-group; or
(3) group management information of the virtual network group or sub-group.

In an embodiment of the present disclosure, the virtual network sub-group information includes at least one of the followings: a virtual network sub-group identifier, or Generic Public Subscription Identifier (GPSI) information of a virtual network sub-group member.

In an embodiment of the present disclosure, the second obtaining module 1201 is further configured to:
receive, from the fourth network element, a first message for requesting to create, delete, or update a virtual network group or sub-group, wherein the first message carries the first information.

In an embodiment of the present disclosure, the apparatus further includes:
a third obtaining module, configured to obtain information of a virtual network group to which current sub-group members belong;
a determination module, configured to determine, based on the information of the virtual network group, whether a first condition and a second condition are met;
a first processing module, configured to reject the request from the fourth network element to create, delete, or update the virtual network group or sub-group when the first condition or the second condition is not met; or send the first information to Unified Data Management (UDM) when the first condition and the second condition are met;
wherein the first condition includes that Generic Public Subscription Identifiers (GPSIs) of all virtual network sub-group members belong to a same virtual network group, and the second condition includes that any virtual network sub-group member do not simultaneously belong to two virtual network sub-groups.

In an embodiment of the present disclosure, the method further includes:
a fourth obtaining module, configured to obtain information of a virtual network group to which the current group members belong;
a second determination module, configured to determine, based on the information of the virtual network group, whether a third condition and a fourth condition are met;
a second processing module, configured to reject the request from the fourth network element to create, delete, or update the virtual network group or sub-group when the third condition or the fourth condition is not met; or send the first information to Unified Data Management (UDM) when the third condition and the fourth condition are met;
wherein the third condition includes Generic Public Subscription Identifiers (GPSIs) of all virtual network sub-group members belong to a same slice and Data Network Name (DNN), and the fourth condition includes that any virtual network group member do not simultaneously belong to two virtual network groups.

In an embodiment of the present disclosure, the first identifier is used to indicate whether communication between members of a virtual network group or virtual network sub-group has a specified characteristic, wherein the specified characteristic indicates that group communication between the members does not require DN interaction.

In an embodiment of the present disclosure, the communication between the members includes at least one of the followings:
(1) unicast communication
(2) multicast communication; or
(3) broadcast communication.

In an embodiment of the present disclosure, the virtual network sub-group is determined by the fourth network element according to an isolation requirement and/or broadcast domain size of a terminal group.

In an embodiment of the present disclosure, the group management information is used to carry multicast information of the virtual network group or virtual network sub-group, wherein the multicast information includes a correspondence relationship between an IP or MAC address of a terminal and a multicast IP or MAC address.

In an embodiment of the present disclosure, the fourth network element is an Application Function (AF).

In the embodiments of the present disclosure, the apparatus can implement each process implemented by the method embodiment shown in FIG. 3 of the present disclosure and achieve the same beneficial effects. To avoid repetition, these will not be elaborated here.

Referring to FIG. 13, an embodiment of the present disclosure provides a transmission apparatus, which is applied to a fourth network element. The fourth network element includes, but is not limited to, an Application Function (AF). The apparatus 1300 includes:
a second sending module 1301, configured to send a virtual network group identifier and first information to a third network element, wherein the first information includes at least one of the followings:
(1) virtual network sub-group information;
(2) a first identifier of a virtual network group or sub-group;
(3) group management information of the virtual network group or sub-group.

In an embodiment of the present disclosure, the virtual network sub-group information includes at least one of the followings: a virtual network sub-group identifier, or Generic Public Subscription Identifier (GPSI) information of a virtual network sub-group member.

In an embodiment of the present disclosure, the second sending module is further configured to:
send, to the third network element, a first message for requesting to create, delete, or update a virtual network group or sub-group, wherein the first message carries the first information.

In an embodiment of the present disclosure, the first identifier is used to indicate whether communication between members of a virtual network group or virtual network sub-group has a specified characteristic, wherein the specified characteristic indicates that group communication between the members does not require DN interaction.

In an embodiment of the present disclosure, the communication between the members includes at least one of the followings:
(1) unicast communication
(2) multicast communication; or
(3) broadcast communication.

In an embodiment of the present disclosure, the virtual network sub-group is determined by the fourth network element according to an isolation requirement and/or broadcast domain size of a terminal group.

In an embodiment of the present disclosure, the group management information is used to carry multicast information of the virtual network group or virtual network sub-group, wherein the multicast information includes a correspondence relationship between an IP or MAC address of a terminal and a multicast IP or MAC address.

In an embodiment of the present disclosure, the third network element is a Network Exposure Function (NEF).

In the embodiments of the present disclosure, the apparatus can implement each process implemented by the method embodiment shown in FIG. 4 of the present disclosure and achieve the same beneficial effects. To avoid repetition, these will not be elaborated here.

It should be noted that the division of modules in the embodiments of the present disclosure is schematic and is only a logical function division. In actual implementation, there may be other division methods. In addition, each functional module in various embodiments of the present disclosure may be integrated into one processing module, or each module may exist physically alone, or two or more modules may be integrated into one module. The above integrated modules can be implemented in the form of hardware or software functional units.

If the integrated module is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.

As shown in FIG. 14, an embodiment of the present disclosure further provides a communication device, including: a memory 1420, a transceiver 1400, and a processor 1410; wherein the memory 1400 is configured to store a computer program; and the processor 1410 is configured to read the computer program in the memory.

In Fig. 14, the bus architecture may include any number of interconnected buses and bridges, and connects various circuits including one or more processors represented by the processor 1410 and the memory represented by the memory 1420. The bus architecture can also link together various other circuits such as peripherals, voltage regulators, and power management circuits, which are all well known in the art and therefore will not be described further herein. The bus interface provides the interface. The transceiver 1400 may be a plurality of elements, including a transmitter and a receiver, to allow for communication with various other apparatuses on the transmission medium. The processor 1410 is responsible for managing the bus architecture and general processing, and the memory 1420 can store data used by the processor 1410 when performing operations.

The processor 1410 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

It should be noted that the above-mentioned communication device provided in the embodiments of the present disclosure can implement all the method steps implemented by the above-mentioned method embodiment applied to the first network element, the second network element, the third network element and the fourth network element, and can achieve the same technical effects. The parts and beneficial effects of the embodiments that are the same as the method embodiment will no longer be described in detail.

In addition, a specific embodiment of the present disclosure further provides a processor-readable storage medium storing a computer program, wherein the program is used to be executed by a processor to implement the steps of the configuration method described above and achieves the same technical effects. To avoid repetition, these will not be elaborated here. The readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Video Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk (SSD)), etc.

It should be noted that the technical solutions provided by the embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, and 5G New Radio (NR) system, etc. These various systems each include a terminal device and a network device. The system can also include a core network part, such as the evolved packet system (EPS), and 5G System (5GS), etc.

Those skilled in the art will appreciate that embodiments of the present application may be provided as methods, systems, or computer program products. Accordingly, the present application may take the form of an entirely hardware embodiment, an entirely software embodiment, or an embodiment that combines software and hardware aspects. Furthermore, the present application may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

Obviously, those skilled in the art can make various modifications and variations to the present disclosure without departing from the spirit and scope of the disclosure. In this way, if these modifications and variations of the present disclosure fall within the scope of the claims of the present disclosure and equivalent thereof, the present disclosure is also intended to include these modifications and variations.

## Claims

1. A transmission method, applied to a first network element, comprising:
forwarding an uplink data packet to a first interface and/or to a Data Network (DN) according to a first rule and a second rule.

2. The method according to claim 1, wherein the method further comprises:
forwarding a downlink data packet to a terminal according to a third rule.

3. The method according to claim 1, wherein the first rule at least comprises: in a Packet Detection Rule (PDR), a destination address is set as first address information.

4. The method according to claim 1, wherein the first rule is at least used to match a data packet whose destination address is first address information.

5. The method according to claim 3, wherein the first rule further comprises: in the PDR, a source interface is set to an access side, Core Network (CN) tunnel information is set to a Protocol Data Unit (PDU) session tunnel header, and in a Forwarding Action Rule (FAR), a destination interface is set to the first interface.

6. The method according to claim 1, wherein the second rule is at least used to match a data packet whose destination address is not first address information, or to match another data packet that does not match the first address information.

7. The method according to claim 1, wherein the second rule comprises: in a Forwarding Action Rule (FAR), a destination interface is set to a core side.

8. The method according to claim 7, wherein the second rule further comprises: a priority of a packet filter that matches all packets is set to a lowest priority, and in the FAR, the destination interface is set to the core side; and/or the FAR instructs the first network element to discard a data packet whose matched destination address is not first address information.

9. The method according to claim 1, wherein the uplink data packet comprises: a data packet received from any 5G virtual network group or sub-group member.

10. The method according to claim 2, wherein the downlink data packet comprises: a data packet received from the DN, or a data packet received through an N6 interface.

11. The method according to claim 2, wherein the third rule is at least used to match a data packet from the DN.

12. The method according to claim 2, wherein the third rule comprises: in a PDR, a source interface is set to a core side, a destination address is set to a data packet whose destination is an Internet Protocol (IP) or a Media Access Control (MAC) address of a terminal, and a FAR is set to an access side.

13. The method according to any one of claims 1 or 2, wherein the method further comprises:
obtaining the first rule and/or the second rule and/or a third rule from a second network element.

14. The method according to claim 3 or 4, wherein the first address information is comprised in the first rule, or a first address is delivered separately by a second network element.

15. The method according to claim 3 or 4, wherein the first address information comprises at least one of the followings: an IP or MAC address of a 5G virtual network group or sub-group member, a multicast IP or MAC address, or a broadcast IP or MAC address.

16. The method according to claim 15, wherein the IP or MAC address of the 5G virtual network group or sub-group member indicates IP addresses or MAC addresses of members belonging to a same virtual network group or sub-group; and/or
the multicast IP or MAC address indicates multicast IP or MAC addresses belonging to a same virtual network group or sub-group.

17. The method according to claim 1, wherein the first network element comprises a User Plane Function (UPF).

18. A transmission method, applied to a second network element, comprising:
sending a first rule and/or a second rule to a first network element, wherein the first rule and the second rule are used to instruct the first network element to forward uplink data to a first interface and/or to a Data Network (DN).

19. The method according to claim 18, wherein the method further comprises:
sending a third rule to the first network element, wherein the third rule is used to forward a downlink data packet to a terminal.

20. The method according to claim 18, wherein the first rule at least comprises: in a Packet Detection Rule (PDR), a destination address is set as first address information; and/or
the first rule is at least used to match data packet whose destination address is the first address information; and/or
the second rule is at least used to match a data packet whose destination address is not the first address information, or to match another packet that does not match the first address information; and/or
the second rule comprises: in a Forwarding Action Rule (FAR), a destination interface is set to a core side; and/or
an uplink data packet comprises: a data packet received from any 5G virtual network group or sub-group member.

21. The method according to claim 20, wherein the first rule further comprises: in the PDR, a source interface is set to an access side, Core Network (CN) tunnel information is set to a Protocol Data Unit (PDU) session tunnel header, and in the Forwarding Action Rule (FAR), the destination interface is set to the first interface; and/or
the second rule further comprises: a priority of a packet filter that matches all packets is set to a lowest priority, and in the FAR, the destination interface is set to the core side; and/or the FAR instructs the first network element to discard a data packet whose matched destination address is not first address information.

22. The method according to claim 18 or 19, wherein
sending the first rule and/or the second rule and/or the third rule to the first network element according to a first identifier, wherein the first identifier is locally configured and/or obtained from Unified Data Management (UDM) or Unified Data Repository (UDR), and/or obtained from a Policy Control Function (PCF).

23. The method according to claim 22, wherein the first identifier is used to indicate whether communication between members of a virtual network group or virtual network sub-group has a specified characteristic, wherein the specified characteristic indicates that group communication between the members does not require DN interaction.

24. The method according to claim 23, wherein the communication between the members comprises at least one of the followings:
unicast communication;
multicast communication; or
broadcast communication.

25. The method according to claim 20, wherein the first address information is comprised in the first rule, or a first address is delivered separately by the second network element; and/or
the first address information comprises at least one of the followings: an IP or MAC address of a 5G virtual network group or sub-group member, a multicast IP or MAC address, or a broadcast IP or MAC address.

26. The method according to claim 18, wherein the second network element comprises a Session Management Function (SMF).

27. A transmission method, applied to a third network element, comprising:
obtaining a virtual network group identifier and first information from a fourth network element, wherein the first information comprises at least one of the followings:
virtual network sub-group information;
a first identifier of a virtual network group or sub-group; or
group management information of the virtual network group or sub-group.

28. The method according to claim 27, wherein the virtual network sub-group information comprises at least one of the followings: a virtual network sub-group identifier, or Generic Public Subscription Identifier (GPSI) information of a virtual network sub-group member.

29. The method according to claim 27, wherein the obtaining the first information from the fourth network element, comprises:
receiving, from the fourth network element, a first message for requesting to create, delete, or update a virtual network group or sub-group, wherein the first message carries the first information.

30. The method according to claim 29, wherein the method further comprises:
obtaining information of a virtual network group to which current sub-group members belong;
determining, based on the information of the virtual network group, whether a first condition and a second condition are met;
when the first condition or the second condition is not met, rejecting the request from the fourth network element to create, delete, or update the virtual network group or sub-group; or
when the first condition and the second condition are met, sending the first information to Unified Data Management (UDM);
wherein the first condition comprises that Generic Public Subscription Identifiers (GPSIs) of all virtual network sub-group members belong to a same virtual network group, and the second condition comprises that any virtual network sub-group member do not simultaneously belong to two virtual network sub-groups.

31. The method according to claim 29, wherein the method further comprises:
obtaining information of a virtual network group to which the current group members belong;
determining, based on the information of the virtual network group, whether a third condition and a fourth condition are met;
when the third condition or the fourth condition is not met, rejecting the request from the fourth network element to create, delete, or update the virtual network group or sub-group; or
when the third condition and the fourth condition are met, sending the first information to Unified Data Management (UDM);
wherein the third condition comprises Generic Public Subscription Identifiers (GPSIs) of all virtual network sub-group members belong to a same slice and Data Network Name (DNN), and the fourth condition comprises that any virtual network group member do not simultaneously belong to two virtual network groups.

32. The method according to claim 27, wherein the first identifier is used to indicate whether communication between members of a virtual network group or virtual network sub-group has a specified characteristic, wherein the specified characteristic indicates that group communication between the members does not require DN interaction.

33. The method according to claim 32, wherein the communication between the members comprises at least one of the followings:
unicast communication;
multicast communication; or
broadcast communication.

34. The method according to claim 27, wherein the virtual network sub-group is determined by the fourth network element according to an isolation requirement and/or broadcast domain size of a terminal group.

35. The method according to claim 27, wherein the group management information is used to carry multicast information of the virtual network group or virtual network sub-group, wherein the multicast information comprises a correspondence relationship between an IP or MAC address of a terminal and a multicast IP or MAC address.

36. The method according to claim 27, wherein the third network element is a Network Exposure Function (NEF), and/or the fourth network element is an Application Function (AF).

37. A transmission method, applied to a fourth network element, comprising:
sending a virtual network group identifier and first information to a third network element, wherein the first information comprises at least one of the followings:
virtual network sub-group information;
a first identifier of a virtual network group or sub-group; or
group management information of the virtual network group or sub-group.

38. The method according to claim 37, wherein the virtual network sub-group information comprises at least one of the followings: a virtual network sub-group identifier, or Generic Public Subscription Identifier (GPSI) information of a virtual network sub-group member.

39. The method according to claim 37, wherein sending the first information to the third network element comprises:
sending, to the third network element, a first message for requesting to create, delete, or update a virtual network group or sub-group, wherein the first message carries the first information.

40. The method according to claim 37, wherein the first identifier is used to indicate whether communication between members of a virtual network group or virtual network sub-group has a specified characteristic, wherein the specified characteristic indicates that group communication between the members does not require DN interaction.

41. The method according to claim 40, wherein the communication between the members comprises at least one of the followings:
unicast communication;
multicast communication; or
broadcast communication.

42. The method according to claim 37, wherein the virtual network sub-group is determined by the fourth network element according to an isolation requirement and/or broadcast domain size of a terminal group.

43. The method according to claim 37, wherein the group management information is used to carry multicast information of the virtual network group or virtual network sub-group, wherein the multicast information comprises a correspondence relationship between an IP or MAC address of a terminal and a multicast IP or MAC address.

44. The method according to claim 37, wherein the third network element is a Network Exposure Function (NEF), and/or the fourth network element is an Application Function (AF).

45. A transmission apparatus, applied to a first network element, the apparatus comprising:
a forwarding module, configured to forward an uplink data packet to a first interface or to a Data Network (DN) according to a first rule, and/or to forward a downlink data packet received from the DN to a terminal according to a second rule.

46. A transmission apparatus, applied to a second network element, the apparatus comprising:
a first sending module, configured to send a first rule and/or a second rule to a first network element, wherein the first rule is used for the first network element to forward an uplink data packet to a first interface or to a Data Network (DN), and the second rule is used for the first network element to forward a downlink data packet received from the DN to a terminal.

47. A transmission apparatus, applied to a third network element, the apparatus comprising:
a second obtaining module, configured to obtain a virtual network group identifier and first information from a fourth network element, wherein the first information comprises at least one of the followings: virtual network sub-group information; a first identifier of a virtual network group or sub-group; or group management information of the virtual network group or sub-group.

48. A transmission apparatus, applied to a fourth network element, the apparatus comprising:
a second sending module, configured to send a virtual network group identifier and first information to a third network element, wherein the first information comprises at least one of the followings: virtual network sub-group information; a first identifier of a virtual network group or sub-group; or group management information of the virtual network group or sub-group.

49. A communication device, comprising: a memory, a transceiver, and a processor; wherein the memory is configured to store a computer program, and the processor is configured to implement the steps of the method according to any one of claims 1 to 44.

50. A processor-readable storage medium storing a computer program, wherein the computer program, when executed by a processor, implements the steps of the method according to any one of claims 1 to 44.
